# EUROPEAN PATENT SPECIFICATION

(11) **EP 1 492 036 B1**
(45) Date of publication and mention of the grant of the patent: **15.04.2009**
(21) Application number: 04253760.5
(22) Date of filing: 23.06.2004
(51) Int. Cl.: G06F 17/30

(54) **Database search system**
Datenbank-Suchsystem
Systeme d'interrogation de base de données

(30) Priority: 24.06.2003 JP 2003180118; 14.04.2004 JP 2004118866
(43) Date of publication of application: 29.12.2004
(73) Proprietor: Seiko Instruments Inc., Chiba-shi, Chiba 261 (JP); Trigraph Ltd, Satte-shi, Saitama (JP)
(72) Inventor: Takazawa, Kazuhisa c/o Seiko Instruments Inc, Mihama-ku, Chiba-shi, Chiba (JP); Yamanoi, Kazuko c/o Trigraph Ltd, Satte-shi Saitam (JP)
(74) Representative: Sturt, Clifford Mark

(56) References cited:
- WO-A-02/054283
- US-A- 5 321 609
- US-B1- 6 321 224
- US-B1- 6 484 162
- US-B1- 6 496 843
- VAN GESTEL H ET AL: "Workshop 4 The FULLTEXT Search Strategy" 15TH SEMINAR FOR APPLICANTS AND DOCUMENTATION METHODS, 10 March 2003 (2003-03-10), - 13 March 2003 (2003-03-13) XP002319086 THE HAGUE
- VAN GESTEL H ET AL: "4 The FULLTEXT search strategy" INTERNET CITATION, [Online] XP002319087 Retrieved from the Internet: URL:http://www.european-patent-office.org/ dg1/training/sfa/2003/html/2003-04.htm> [retrieved on 2005-02-23] & VAN GESTEL H ET AL: "Workshop 4 The FULLTEXT Search Strategy" 15TH SEMINAR FOR APPLICANTS AND DOCUMENTATION METHODS, 10 March 2003 (2003-03-10), - 13 March 2003 (2003-03-13) DEN HAGUE

## Description

The present invention relates to a database search system that allows retrieval of words and proper nouns serving as entry words from an enormous volume of data such as an encyclopedia by searching the words and proper nouns based on data explaining entry words and data indicating definitions, not based on spellings of entry words.

Conventionally, a crossword solver used for solving a crossword displays a candidate word containing characters matching known characters by input of wildcard characters in positions of unknown characters as well as input of known characters, followed by depression of an execution key. In addition, conventional crossword solvers include one that attaches class words/phrases to stored words for classification and allows preliminary designation of a class followed by execution of an operation for searching the words for an intended one, and one that additionally contains compound words consisting of plural words in a stored word list and has a function of retrieving and displaying only a compound word

Upon use of such a crossword solver, it is required that a user forgets a word itself of a target word, the answer to a quiz, although knowing the entirety or part of the word. This is because the crossword solver merely displays only the retrieved word, but displays, for example, neither the definition of the retrieved word nor information related thereto. In particular, crossword quizzes often have questions on proper nouns. Therefore, even if a character string matching a crossword can be retrieved, there is no way to verify whether or not the character string represents the word in question, which is left to the user's judgment.

Further, a product having a list of words attached with class words/phrases for classification allows retrieval of a target word based on preliminary designation of a class by class word/phrase, yet has a disadvantage that the target word cannot be found by making a wrong selection in class.

H Van Gestel et al., "Workshop 4 The FULLTEXT Search Strategy", 15th Seminar for Applicants and Documentation Methods, 2003-03-10, XP002319086 discloses a system for searching a classified database in which a class code is entered to select a particular class of data and data within the selected class is searched for matches with a keyword, which may contain wildcard characters.

In view of the circumstances, the present invention has an object to provide a database search system that allows storage of a large volume of information particularly related to proper nouns, accurate search through such a database at high speed without limitations posed by classification, and display of the result.

In order to achieve the above-mentioned object, according to a first aspect of the present invention there is provided an electronic word game aid machine comprising:
a database classified into one or more classes;
search means capable of receiving input words and dividing the input words into words containing a wildcard character and words containing no wildcard character;
keyword search means capable of searching the database for classes matching one or more of the input words containing no wildcard character, and if matching classes are found, limiting the search to those classes and removing the corresponding matching input words from the search;
wildcard search means capable of searching for data matching one or more of the input words containing a wildcard character, and retrieving the matching data as a search result;
wherein the wildcard search means is capable of searching only the matching classes if matching classes have been found by the keyword search means, and is further capable of searching the entire database if no matching classes have been found.

The aspect described above allows search through the words related to a target word, thereby making it easy to verify whether or not the result shows the target word.

Embodiments of the invention will now be described by way of further example only and with reference to the accompanying drawings, in which:
Fig. 1 is a block diagram showing a structure of an electronic word game machine according to an embodiment of the present invention;
Fig- 2 is an external view of the electronic word game machine according to the embodiment of the present invention;
Figs. 3A-3D are diagram showing an example of a proper noun data structure for the electronic word game machine according to the embodiment of the present invention;
Fig. 4 is a flow chart showing an example of a usage state of the electronic word game machine according to the embodiment of the present invention;
Fig. 5 is another flow chart showing the example of the usage state of the electronic word game machine according to the embodiment of the present invention;
Fig. 6 is another flow chart showing the example of the usage state of the electronic word game machine according to the embodiment of the present invention; and
Figs. 7A-7B are diagram showing an example of a screen displayed at each step of Fig. 6.

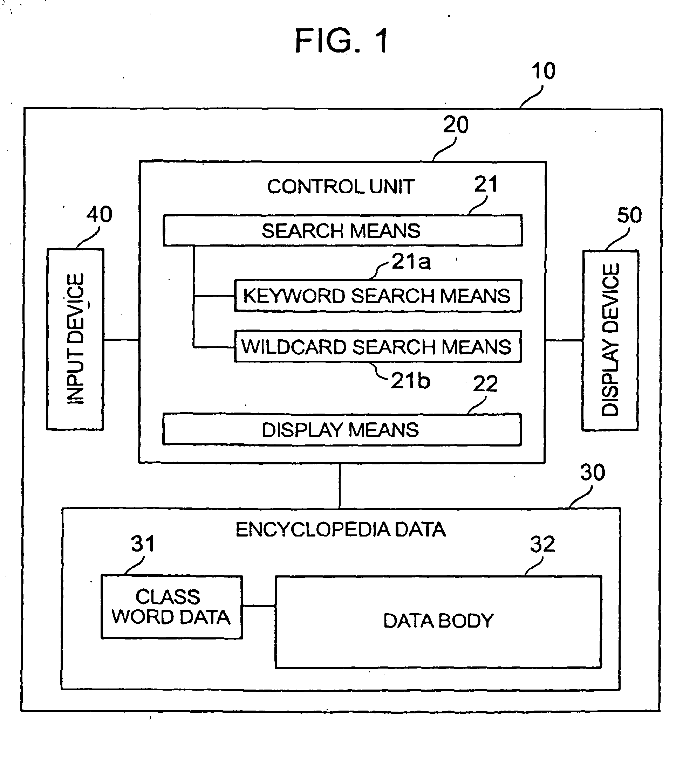

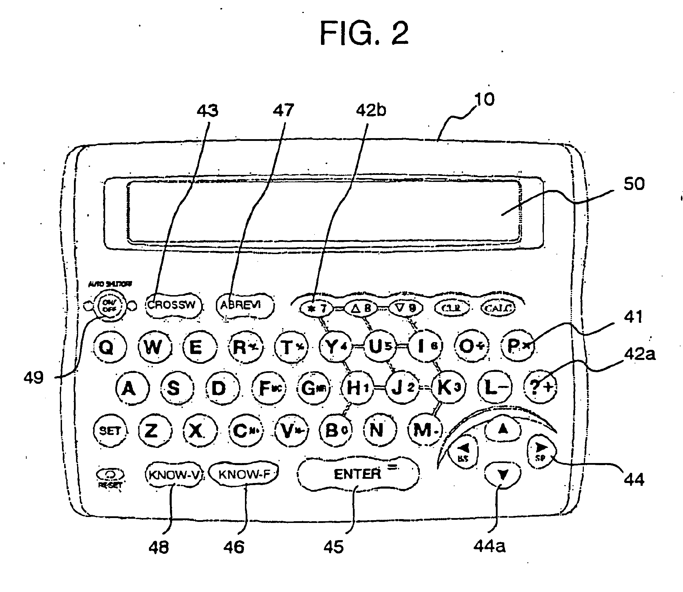

Fig. 1 is a block diagram showing a structure of an electronic word game aid machine that functions as a database search system according to the present invention. Fig. 2 is an external view of the electronic word game aid machine.

As shown in the drawings, an electronic word game aid machine 10 is provided with a control unit 20 for performing control of each unit, proper noun data 30 stored in a memory such as a ROM, an input device 40 for performing input of a character and operation of an electronic dictionary, and a display device 50 for displaying various information.

The control unit 20 performs multiple-unit control of the electronic word game aid machine 10 by causing a CPU to execute a control program etc. stored in the memory such as a ROM, and mainly includes a search means 21 and a display means 22. The search means 21 includes keyword a search means 21a and a wildcard search means 21b.

In this embodiment, the proper noun data 30 is composed of a crossword word list 34, proper noun data bodies 33, title word/phras e data 31 indicating a first class of each proper noun data body 33, and title word/phrase data 32 indicating a second class thereof. For example, the crossword word list 34 is data consisting of only words attached with class codes for classification. In contrast, each proper noun data body 33 has its data classified by being attached with a first major class, a second minor class, and title words/phrases, in which not only words but also information related thereto are stored as the data. For example, stored with a personal name are years of birth-death, a country of origin, and highlighted achievements and works. This is why the major class title words/phrases 31 and the minor class title words/phrases 32 are provided in addition to the proper noun data bodies 33.

The input device 40 includes character keys 41 for inputting characters, a mode key 43 for selecting a search method, wildcard character keys 42a and 42b each for inputting a wildcard character, and a power switch 49 for turning on/off a power. Further included are cursor keys 44 for moving a cursor and a translation key 45 for confirming an input character string. In addition, a "KNOW-F" (= Knowledge Find) key 46 is provided for selecting a search for an operation according to the present invention.

The display device 50 is a liquid crystal display device and capable of displaying various information.

The search means 21 searches for words and data corresponding to characters input by the character keys 41 etc. Specifically, in a search mode selected by depressing any one of "CROSW" (= Crossword) of the search mode selection key 43, "ABREVI" (= Abbreviation) of a key 47, "KNOW-V" (= Knowledge View) of a key 48, and "KNOW-F" (= Knowledge Find) of the key 46, words and data matching an input character string under conditions of each search mode are retrieved from the proper noun data 30.

For example, in "CROSW" (= Crossword), the input character string is subjected to the search with a wildcard character input in a position of an unknown character to retrieve a word having an appropriate character in the position of the wildcard character.

Also, in "ABREVI" (= Abbreviation), an abbreviation matching the input character string is retrieved. If no stored abbreviation is matched, definition data of abbreviations is searched for data having a word matching the input character string.

Further, in "KNOW-F" (= Knowledge Find), the search is performed for a class title word/phrase matching the input character string containing at least one or more words, and if there is a matched title word/phrase stored, the search target is limited to the matched class to search for data including another input character string. Also, if a wildcard character is contained in the input character string, the search target is limited to the input character string and the matched class to retrieve data including a word having an appropriate character in the position of the wildcard character.

The display means 22 outputs necessary guidance information on various operations, information representing results retrieved by the search means 21, and other such information to the display device 50.

Here, description will be made of a "KNOW-F" (= Knowledge Find) search mode that is the feature of the electronic word game aid machine 10.

In the knowledge search mode selected by depressing the "KNOW-F" 46, the search means 21 performs a keyword search and a wildcard search through the proper noun data 30 to retrieve data that includes a word matching a word containing a desired keyword and a wildcard character.

Here, the title words/phrases 31 for the first classes and the title words/phrases 32 for the second classes are data separate from the proper noun data bodies 33. This leads to high-speed verification as to whether or not a class to be searched based on the input character string can be limited. In addition, address information for access to each proper noun data body 33 corresponding to the respective titlewords/phrases is provided, making it possible to display the proper noun data body 33 at high speed by designation of a class.

Note that, in order to allow the title words/phrases 31 and 32 to be recognized from the proper noun data body 33, class numbers for the first classes 31 and the second classes 32 are each stored in the top portion of each class of the proper noun data bodies 33.

Accordingly, the "Knowledge Find" search mode also allows an operation in which the first class 31 and the second class 32 are designated in order, and the corresponding proper noun data body 33 is displayed and scrolled for a search.

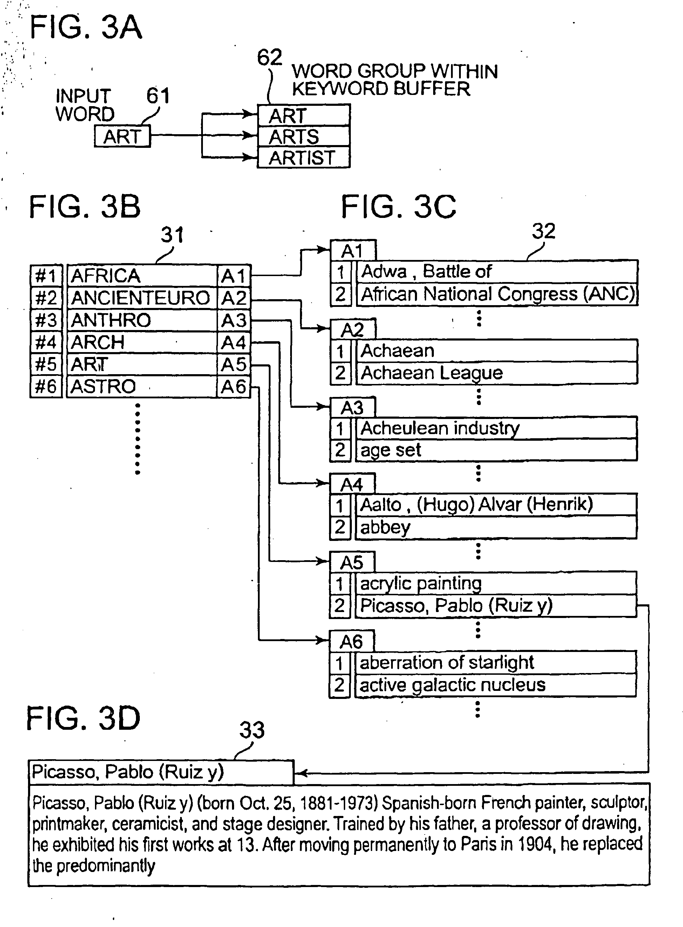

Now, Fig. 3 shows example data structures of the title words/phrases 31 for the first class and the title words/phrases 32 for the second class by taking the proper noun data body 33 as an example.

Fig. 3 shows examples of data structures of the title words/phrases 31 and 32 for classification and the classified proper noun data body 33. The simplest examples are shown in Fig. 3B, Fig. 3C, and Fig. 3D, in which the title words/phrases 31 and title words/phrases 32 for the first and second separate classes, respectively, are arranged and attached with addresses for access to the proper noun data bodies 33 in the storing order. Each class number has only to be stored in the top portion of each class of the proper noun data bodies 33.

Fig. 3B shows an example of data on the title words/phrases 31 for the first classes, Fig. 3C shows an example of data on the title words/phrases 32 for the second classes, and Fig. 3D shows an example of the proper noun data body 33 with the first class being [#5] and the second class being [#5].

The data of Fig. 3C is obtained by decomposing the data on the title words/phrases 31 for the first classes on a word basis, and adding the number for each second class word/phrase 32 to the last portion of each line. Similarly, the data of Fig. 3B is obtained by decomposing the data on the title words/phrases 32 for the second classes on a word basis, and adding the address information for access to the proper noun data body 33 to the last portion of each line. In addition, each group of the second classes defined according to a first class has the number for the first class in the top portion.

Accordingly, by extracting the title words/phrases 31 and 32 for classification, the classes for the proper noun data bodies 33 to be a search range can be found at high speed and thus limited.

Further, in the case of comparison with a word in a title word/phrase for a search, an input word is transformed into plural words including an inflected form, and all the plural words are compared with the word in the title word/phrase, whereby even a word input in a plural form can be matched with the corresponding title word/phrase. An example thereof is shown in Fig. 3A. In this example, when the word "ART" is input, the comparison upon the actual search is performed on the four words "ART", "ARTS", and "ARTIST" as the search with respect to the word "ART". While the word "ART" serves as an input word 61, "ART", "ARTS", and "ARTIST" serve as words 62 within a keyword buffer.

It is usually difficult for a user to distinguish the input of a title word/phrase for narrowing down the classes from the input of the related information. This is because it is extremely difficult for the user to memorize in advance the stored title words/phrases for the whole classes. In view of this, with a search data structure and search method according to the present invention, the user can be allowed to input, without distinction, the title word/phrase for classification, the information related thereto, and further a search target word to be the answer to a quiz.

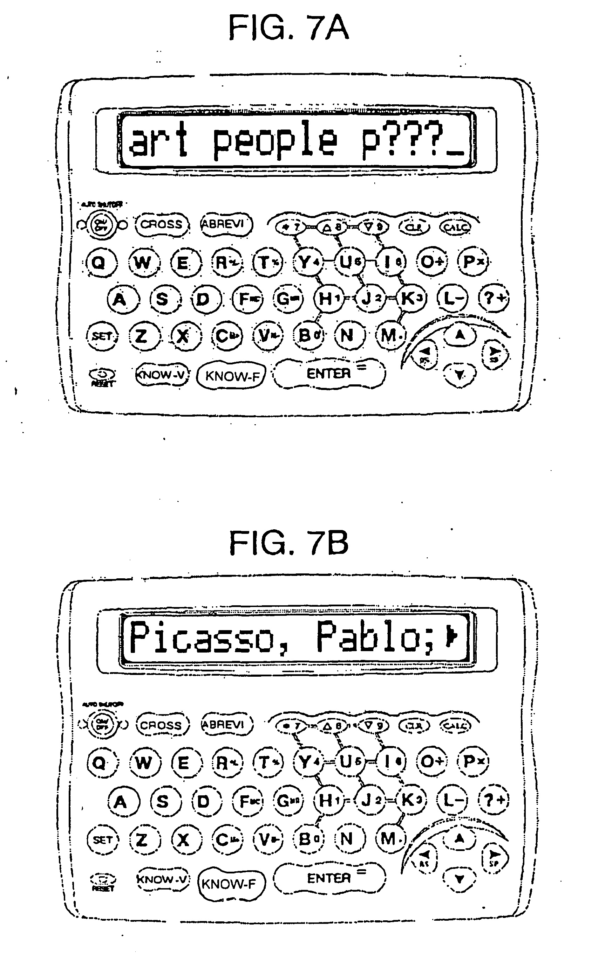

In such a data structure, it is possible to follow search targets from the title word/phrase for the first class to the title word/phrase for the second class, and subsequently to the proper noun data for each class in order. For example, in the case where a question from a crossword quiz describes a target word as a person related to painting whose name starts with "P" and who was born in 1881, as shown in Fig. 7A, "arts", "people", and "p??????" are input. Then, "art" is found in the title words/phrases 31 for the first classes, and the first class is limited to #5. The input words all of which generate inflected forms are transformed into a word group including the basic forms and inflected forms, and upon comparison for the whole, all the words in the word group are compared with a word to be compared which is read from a database. Then, if any word within the word group is matched, it is judged that the input word is matched. Accordingly, even if a user inputs a word in any form such as a plural form, a past tense form, or an adjective form, it becomes easier to match the word with the title words/phrases and data indicating the classes of proper noun data, and more accurate search can be performed.

Alternatively, without limiting to the word group including the inflected forms according to this embodiment, the case of words related to "travel" can be taken as an example. Related information is previously stored as the word group consisting of words including the related words "trip", "excursion", and "voyage" in addition to "travel" . Therefore, desired data can be searched more accurately and at higher speed.

When the word is matched with the title word/phrase 31 for the first class, the matched word "art" is deleted from the input character string. Further, the title word/phrase 32 for the second class "people" is matched, and the second class is limited to #2. At this time, the word "people" matching with the title word/phrase 32 for the second class is deleted from the input character string. Then, in a class #2-2, the remaining word "p??????" containing wildcard characters is searched for to retrieve "Picasso, Pablo (1881-1973) Spanish painter...". Here, based on the information indicating the year of birth is 1881, it is verified that "Picasso" is the correct answer. A display example of search results is shown in Fig. 7B.

Alternatively, the input can of course be performed along with the year "1881" as the input character string. Otherwise, by inputting only "arts" and "people" as the input character strings, all the data included in the class #2-2 can be searched and displayed.

As described above, the input words are divided into words containing a wildcard and words containing no wildcard, the words containing no wildcard are used to narrow down the first and second classes, and it is examined within the range of classes finally defined whether or not there are words matching the words containing a wildcard. According to this method, the search can be performed based on a word related to a target answer, and if part of the characters composing a word to be the target answer are clear, it is possible to search for the target answer at high speed by using a wildcard character along with the related word. In addition, search result data also includes the related information, thereby making it easy to verify whether or not the result is the word to be the correct answer.

Further, the above description of operation shows the example in which the input word matches the title word/phrase for classification, while if there is no matching, the class is not limited. Then, a word containing no wildcard is compared with data for plural classes, and a word containing a wildcard is compared with the data including the searchword. According to this operation, even if classes are not limited, it is possible to search for the data matching a word containing a wildcard from within the data including related words. Examples thereof include a search performed by inputting a personal name along with the above-mentioned year of birth or year of death using a wildcard.

Operations similar to the search operation according to the present invention include electronic dictionaries having a function of displaying English conversational sentences which allows retrieval of conversational sentences for an English conversation or the like. They performs an operation of manually selecting classes for conversational sentences based on classified usage scenes or the like, and displaying and scrolling data for a search within limited classes, or on the contrary, searching for conversational sentences containing an input word from among all the data for unlimited classes. This operation is completely different from the search operation according to the present invention. The present invention provides a completely revolutionary search operation that allows automatic retrieval of target data performed by collectively inputting related information possessed by a user in no particular order, and if part of a word is unclear, simultaneously using a wildcard character for the input.

Note that the specific data structure and search operation described above are not particularly limited. For example, the data is not necessarily divided into two groups of classes, and may range from data having one group of classes to data having many layers of classes.

Further, according to this embodiment, the classified database is set as the proper noun data, but is not limited thereto. For example, data obtained by classifying encyclopedia data on an entry word basis may be used to set description sentences for entry words as the class words/phrases, and search may be performed for verification as to whether or not a word containing a wildcard matches an entry word with respect to data including the words input in the description sentences. Accordingly, the encyclopedia data can be utilized as a powerful information source for word games and quizzes.

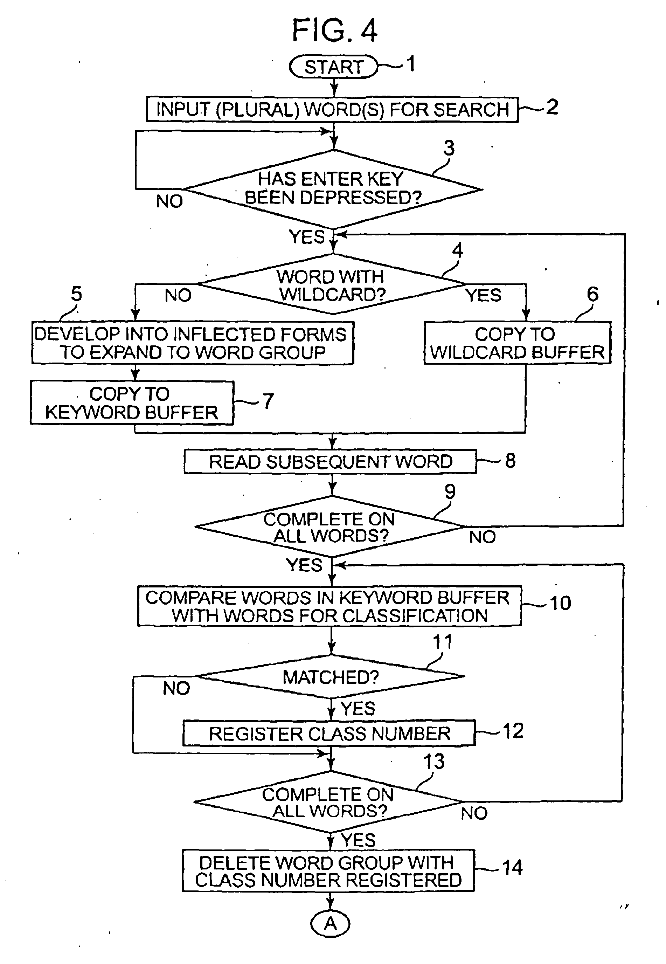

Now, description will be made of a series of operations for a data search performed with the electronic word game aid machine 10 according to this embodiment with reference to flow charts of Figs. 4 to 6. Also, Fig. 7A and Fig 7B show examples of a screen to be displayed.

First, referring to Fig. 4, whenthe "KNOW-F" key 46 is depressed to start a function of the electronic word game aid machine 10 at step 1, a character input screen is displayed on the display device 50 by the display means 22. At step 2, characters are input by the character keys 41 onto this screen. The input characters are temporarily stored in the RAM as a character string. The screen displayed at this time is shown in Fig. 7A. Note that Fig. 7A shows an example in which "arts" and "people" have been input as keywords and "p??????" is being input as a wildcard word.

Next, it is judged at step 3 whether or not the translation key 45 has been depressed. If it has been depressed, the search means 21 divides the input words into keywords and wildcard words in order at steps 4, 6, and 7. At this time, the input word is developed into a word group including an inflected form at step 5, a keyword group is stored into the keyword buffer within the RAM, and the wildcard words are stored into a wildcard word buffer within the RAM. After all the words have been developed into inflected forms and stored into the buffers at step 9, the process advances to step 10 to compare the word group in the keyword buffer with the title words/phrases 31 for the first classes and the title words/phrases 32 for the second classes. At step 12, the class number for the word group matched in the above search is stored in the top portion of the keyword buffer. When the search is complete on all the keyword groups at step 13, the process advances to step 14 to delete the word group with the class number stored from the keyword buffer while leaving the class number therein. Accordingly, the comparison will not be performed on the same words in the subsequent operations.

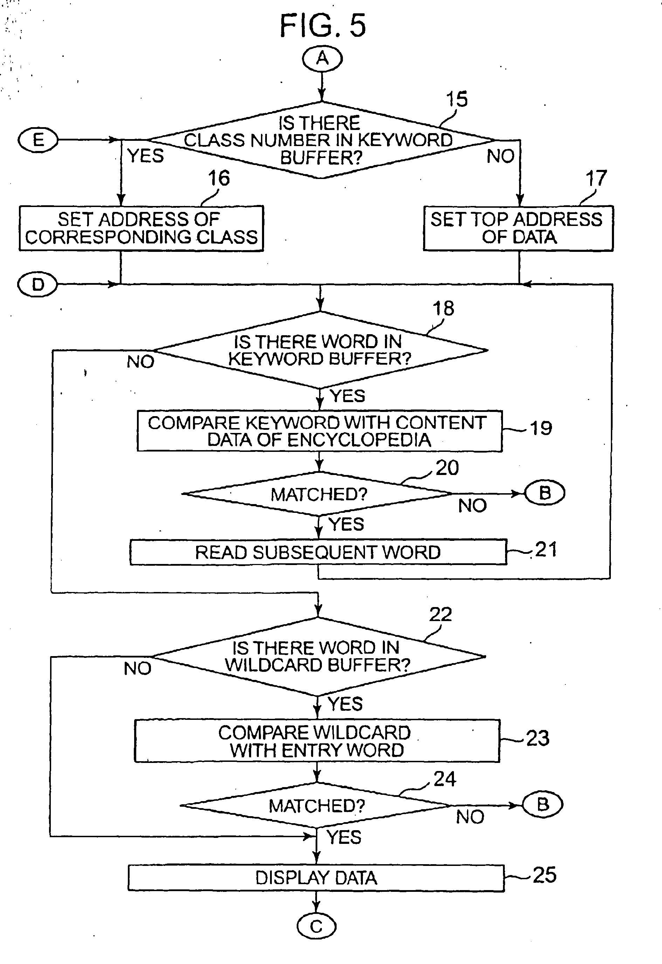

Next, in Fig. 5, it is checked whether or not the keyword buffer contains any class number at step 15. If a class number is contained, preparation is made at step 16 for performing the subsequent search for the proper noun data based on an address corresponding to the class number. If no class number is contained, preparation is made at step 17 for performing a search through the proper noun data bodies 33 from the top portion.

Then, it is examined at step 18 whether or not the keyword buffer contains any word, and if a word is contained, the word is compared with each of proper noun data bodies 33. If this comparison results in no matched words at step 20, it is checked whether or not there still exists any proper noun data that has not been compared yet at steps 27 and 28. If there exists proper noun data that has not been compared yet, the preparation is made for performing the comparison based on an address of the subsequent data, and the process returns to step 18 to repeat the comparison.

If the comparison is complete on the keyword group to be compared, or if there is no keyword group left from the start, the process advances to step 22 to check if the wildcard buffer contains any word. If a word is contained, the proper noun data that was used for comparison at step 19 or has been prepared for comparison to be performed at that time is searched through at step 23 for verification as to whether or not there is a word matching a word containing a wildcard.

If there is a matched word found at step 24, the retrieved proper noun data is displayed on the display device 50 at step 25. If there is no marched word, it is checked whether or not there still exists any proper noun data that has not been compared yet at step 27. If there exists proper noun data that has not been compared yet, the preparation is made for performing the comparison based on an address of the subsequent data, and the process returns to step 18 to repeat the comparison based on the word group in the keyword buffer.

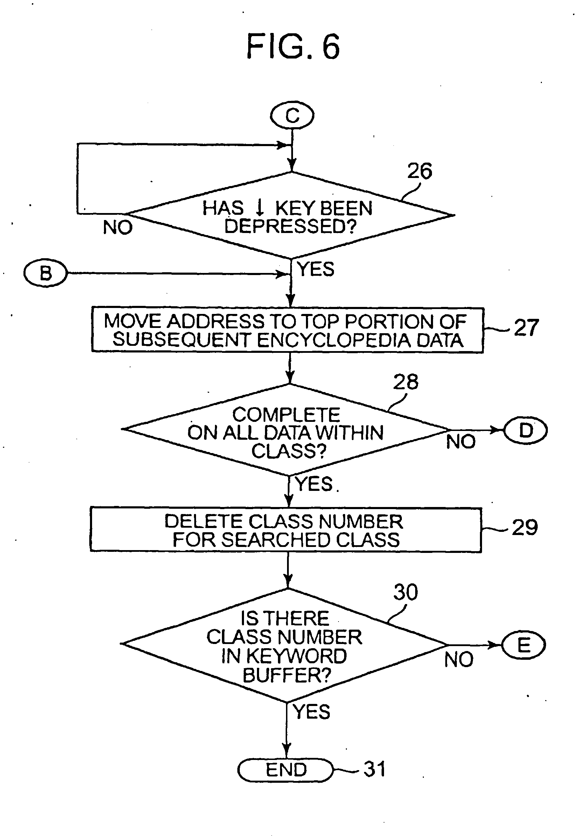

Further, in the state where the retrieved proper noun data is displayed on the display device 50, the process waits at step 26 for depression of a key 44a for instructing a search through the subsequent proper noun data. If it is depressed, the preparation is at step 27 similarly made for performing the comparison based on an address of the subsequent data, and the process returns to step 18 to repeat the comparison based on the word group in the keyword buffer in Fig. 6.

Note that in this embodiment, a single data body is displayed on the display device capable of single-line display of proper noun data, but the display is not limited thereto. It is also possible to display retrieved data as a list on a multi-line display screen.

Note that when it is judged at step 30 that there is no proper noun data that has not been searched through yet, the process ends at step 31.

Further, if the keyword does not match any title words/phrases indicating classes, a vide range where the classes are not limited is searched, related words are searched even without inputting a wildcard word, or other such searches are performed. Consequently, a user can automatically search the most related data without intending to do so.

Furthermore, by developing a keyword into a related word group before execution of a search based on the keyword, the range where a word inputted by a user is matched is automatically expanded, thereby producing an effect that the desired data can be searched more accurately and at higher speed.

## Claims

1. An electronic word game aid machine (10) comprising:
a database (30) classified into one or more classes;
search means (21) capable of receiving input words and dividing the input words into words containing a wildcard character and words containing no wildcard character;
keyword search means (21a) capable of searching the database (30) for classes matching one or more of the input words containing no wildcard character, and if matching classes are found, limiting the search to those classes and removing the corresponding matching input words from the search;
wildcard search means (21b) capable of searching for data matching one or more of the input words containing a wildcard character, and retrieving the matching data as a search result;
wherein the wildcard search means (21b) is capable of searching only the matching classes if matching classes have been found by the keyword search means (21a), and is further capable of searching the entire database (30) if no matching classes have been found.

2. The electronic word game aid machine (10) according to claim 1, wherein the classified database (30) is a database related to an encyclopedia.

3. The electronic word game aid machine (10) according to claim 1, wherein the keyword search means (21a) performs the search based on an inflected form of one or more of the input words containing no wildcard character.

4. The electronic word game aid machine (10) according to claim 1, wherein the classified database (30) is provided with words for classification of the database (30); and
the keyword search means (21a) puts a highest priority on the words for classification for comparison.

5. The electronic word game aid machine (10) according to claim 1, wherein in a case where an input word is not included in a target database, without interrupting the search, the word that is not included in the target database is excluded from the search, and only words included in the target database are used to continue the search.

6. The electronic word game aid machine (10) according to claim 5, further comprising means for, in a case where the word that is not included in the target database is excluded from the search, notifying a user of the search system (10) that one of the input words is excluded.

7. The electronic word game aid machine (10) according to claim 1, wherein each of a plurality of data bodies in the database.(30) is a member of a first, major, class and a second, minor, class.

## Patentansprüche

1. Elektronische Word-Game-Hilfsmaschine (10), umfassend:
eine Datenbank (30), die in eine oder mehr Klassen klassifiziert ist;
ein Durchsuchungsmittel (21), das zum Empfangen eingegebener Wörter und Unterteilen der eingegebenen Wörter in Wörter, die ein Wildcard-Zeichen enthalten, und Wörter, die kein Wildcard-Zeichen enthalten, imstande ist;
ein Schlüsselwortdurchsuchungsmittel (21a), das zum Durchsuchen der Datenbank (30) nach Klassen, die mit einem oder mehr der eingegebenen Wörter übereinstimmen, die kein Wildcard-Zeichen enthalten, und, wenn übereinstimmende Klassen gefunden werden, zum Begrenzen der Suche auf jene Klassen und Entfernen der entsprechenden übereinstimmenden eingegebenen Wörter aus der Suche imstande ist;
ein Wildcard-Durchsuchungsmittel (21b), das zum Durchsuchen nach Daten, die mit einem oder mehr der eingegebenen Wörter übereinstimmen, die ein Wildcard-Zeichen enthalten, und Gewinnen der übereinstimmenden Daten als Suchergebnis imstande ist;
wobei das Wildcard-Durchsuchungsmittel (21b) imstande ist, nur die übereinstimmenden Klassen zu durchsuchen, wenn übereinstimmende Klassen von dem Schlüsselwortdurchsuchungsmittel (21a) gefunden wurden, und des Weiteren imstande ist, die gesamte Datenbank (30) zu durchsuchen, wenn keine übereinstimmenden Klassen gefunden wurden.

2. Elektronische Word-Game-Hilfsmaschine (10) nach Anspruch 1, wobei die klassifizierte Datenbank (30) eine Datenbank ist, die sich auf eine Enzyklopädie bezieht.

3. Elektronische Word-Game-Hilfsmaschine (10) nach Anspruch 1, wobei das Schlüsselwortdurchsuchungsmittel (21a) die Suche auf der Basis einer gebeugten Form eines oder mehr der eingegebenen Wörter durchführt, die kein Wildcard-Zeichen enthalten.

4. Elektronische Word-Game-Hilfsmaschine (10) nach Anspruch 1, wobei die klassifizierte Datenbank (30) mit Wörtern zur Klassifizierung der Datenbank (30) bereitgestellt ist; und
das Schlüsselwortdurchsuchungsmittel (21a) den Wörtern zur Klassifizierung für einen Vergleich höchste Priorität verleiht.

5. Elektronische Word-Game-Hilfsmaschine (10) nach Anspruch 1, wobei in einem Fall, in dem ein eingegebenes Wort in einer Zieldatenbank nicht enthalten ist, ohne Unterbrechung der Suche, das Wort, das nicht in der Zieldatenbank enthalten ist, aus der Suche ausgeschlossen wird, und nur Wörter, die in der Zieldatenbank enthalten sind, zur Fortsetzung der Suche verwendet werden.

6. Elektronische Word-Game-Hilfsmaschine (10) nach Anspruch 5, des Weiteren umfassend Mittel zum Benachrichtigen eines Anwenders des Durchsuchungssystems (10), dass eines der eingegebenen Wörter ausgeschlossen wird, wenn das Wort, das nicht in der Zieldatenbank enthalten ist, aus der Suche ausgeschlossen wird.

7. Elektronische Word-Game-Hilfsmaschine (10) nach Anspruch 1, wobei jeder von mehreren Datenkörpern in der Datenbank (30) ein Element einer ersten Hauptklasse und einer zweiten Nebenklasse ist.

## Revendications

1. Machine électronique d'aide pour jeu de lettres (10) comprenant :
une base de données (30) classifiée en une ou plusieurs classes ;
un moyen de recherche (21) capable de recevoir des mots saisis et de diviser les mots saisis en mots contenant un caractère générique et en mots ne contenant aucun caractère générique ;
un moyen de recherche par mot clé (21a) capable d'effectuer des recherches dans la base de données (30) pour des classes correspondant à un ou davantage des mots saisis ne contenant aucun caractère générique, et si des classes correspondantes sont trouvées, limiter la recherche à ces classes et retirer les mots saisis correspondants qui correspondent de la recherche;
un moyen de recherche de caractère générique (21b) capable de rechercher des données correspondant à un ou davantage de mots saisis contenant un caractère générique, et récupérer les données correspondantes en tant que résultat de recherche ;
le moyen de recherche de caractère générique (21b) étant capable de rechercher seulement les classes correspondantes si des classes correspondantes ont été trouvées par le moyen de recherche par mot clé (21a), et étant par ailleurs capable de rechercher dans toute la base de données (30) pour savoir si des classes non correspondantes ont été trouvées.

2. Machine électronique d'aide pour jeu de lettres (10) selon la revendication 1, la base de données classifiée (30) étant une base de données concernant une encyclopédie.

3. Machine électronique d'aide pour jeu de lettres (10) selon la revendication 1, le moyen de recherche par mot clé (21a) effectuant la recherche sur la base d'une forme infléchie d'un ou plusieurs mots saisis ne contenant aucun caractère générique.

4. Machine électronique d'aide pour jeu de lettres (10) selon la revendication 1, la base de données classifiée (30) étant munie de mots pour la classification de la base de données (30) ; et
le moyen de recherche par mot clé (21a) donnant une priorité plus élevée aux mots pour une classification de comparaison.

5. Machine électronique d'aide pour jeu de lettres (10) selon la revendication 1 avec laquelle, dans un cas où un mot saisi n'est pas inclus dans une base de données cible, sans interruption de la recherche, le mot qui n'est pas inclus dans la base de données cible est exclu de la recherche, et seulement des mots inclus dans la base de données cible étant utilisés pour poursuivre la recherche.

6. Machine électronique d'aide pour jeu de lettres (10) selon la revendication 5, comprenant par ailleurs un moyen pour, dans le cas où le mot qui n'est pas inclus dans la base de données cible est exclu de la recherche, signaler à l'utilisateur du système de recherche (10) que l'un des mots saisis est exclu.

7. Machine électronique d'aide pour jeu de lettres (10) selon la revendication 1, chacun parmi une pluralité des corps de données de la base de données (30) étant un élément d'une première classe principale, et d'une deuxième classe secondaire.
